# FASCICULE DE BREVET EUROPEEN

(11) **EP 2 534 107 B1**
(45) Date de publication et mention de la délivrance du brevet: **15.01.2014**
(21) Numéro de dépôt: 11702241.8
(22) Date de dépôt: 07.02.2011
(51) Int. Cl.: C03B 18/06

(54) **DISPOSITIF DE MANIPULATION DU BORD D'UN RUBAN DE VERRE FLOTTE, COMPRENANT UNE MOLETTE, ET INSTALLATION COMPORTANT UN TEL DISPOSITIF**
VORRICHTUNG ZUR HANDHABUNG DER KANTE EINES FLOATGLASBANDES MIT DAUMENRAD UND AUSRÜSTUNG MIT EINER DERARTIGEN VORRICHTUNG
DEVICE FOR HANDLING THE EDGE OF A RIBBON OF FLOAT GLASS, INCLUDING A KNURL, AND EQUIPMENT COMPRISING SUCH A DEVICE

(30) Priorité: 10.02.2010 BE 201000070
(43) Date de publication de la demande: 19.12.2012
(73) Titulaire: Fives Stein Belgium S.A., 5060 Falisolle (BE)
(72) Inventeur: LEDRU, Pierre, B-5060 Falisolle (BE)
(74) Mandataire: Michardière, Bernard
(86) Numéro de dépôt international: PCT/EP2011/051747
(87) Numéro de publication internationale: WO 2011/098423

(56) Documents cités:
- FR-A1- 2 548 657
- US-A- 4 299 612

## Description

La présente invention est relative à un dispositif de manipulation du bord d'un ruban de verre pâteux en déplacement sur un bain liquide dans une chambre de flottage, comprenant une molette.

Ce dispositif est généralement installé en bordure d'un bain d'étain en fusion sur lequel du verre pâteux à environ 1000°C est déversé en continu de manière à le laisser flotter, s'étaler et obtenir l'épaisseur souhaitée avant que le ruban de verre ne subisse à la sortie du bain les traitements thermiques de l'étenderie.

Le processus est continu en ce sens que, de la sortie du four, là ou se déverse le verre dans la chambre de flottage, à la ligne de découpe du verre, il n'y a qu'un seul et même ruban de verre à des températures et à des états différents.

Les propriétés (températures, viscosité, densité, ...) du verre et de l'étain sont telles que, dans les conditions habituelles de production, le verre flotte et s'étale à une épaisseur d'environ 5,5 mm, appelée épaisseur naturelle.

Les dispositifs de bord ont pour but de modifier les forces d'équilibre du ruban de verre flottant, afin de modifier et d'ajuster à souhait l'épaisseur de verre, comme exposé notamment dans FR-A-2581984. La molette agit sur la surface du ruban, notamment pour modifier sa largeur et ainsi son épaisseur.

D'une manière générale, plus l'épaisseur produite s'éloigne de l'épaisseur naturelle, plus on doit adjoindre de paires de dispositifs de bord. Ce nombre peut atteindre par exemple 20 paires dans les lignes de production de verre extra mince (inférieur à 0,75 mm).

Les dispositifs de bord sont actuellement de deux types : au sol ou suspendus. Ils présentent sensiblement les mêmes fonctions si ce n'est que les dispositifs suspendus présentent l'avantage d'un encombrement réduit pour une stabilité équivalente.

Les dispositifs de bord sont placés par paires de part et d'autre de la chambre de flottage et leurs molettes dentées entraînent les bords du ruban flottant.

Les dispositifs de bord sont des machines permettant de positionner dans divers axes la molette qui vient entraîner le bord du ruban de verre flottant.

Ces dispositifs permettent généralement cinq mouvements d'une lance à l'extrémité de laquelle est fixée la molette :
1. Une rotation de l'ensemble lance-molette autour de l'axe longitudinal de la lance, à vitesse variable ;
2. Un mouvement de pénétration (avance-retrait) de l'ensemble lance-molette dans la chambre de flottage par déplacement longitudinal de l'ensemble du dispositif de bord dans un plan parallèle à la surface du ruban ;
3. Un mouvement d'angulation appelé « slew » (angle dans un plan parallèle au ruban de verre), par pivotement de l'ensemble du dispositif de bord autour d'un axe vertical pouvant atteindre plus ou moins 20° dans certains cas ;
4. Un mouvement de montée/descente de l'ensemble du dispositif de bord suivant une direction verticale ;
5. Un mouvement de pinçage (angle perpendiculaire au ruban de verre) par pivotement de l'ensemble du dispositif de bord autour d'un axe horizontal parallèle au ruban de verre, avec possibilité, dans certains cas, de dépinçage rapide (dégagement d'urgence de la molette du verre).

Pour du verre épais, supérieur à 5,5 mm, les vitesses de rotation de la molette sont décroissantes et les angles d'angulation sont opposés au sens de flux du verre.

Pour du verre mince, inférieur à 5,5 mm, les vitesses de rotation de la molette sont croissantes et les angles d'angulation sont dans le sens de flux du verre.

Les différents mouvements de ces dispositifs peuvent être entièrement motorisés et des codeurs incrémentaux permettent de connaître la position exacte des éléments mobiles de chaque dispositif.

La molette est dentée, de diamètre par exemple de l'ordre de 200 mm. Elle est généralement soudée ou vissée sur la lance, qui est mise en rotation autour de son axe géométrique longitudinal.

La lance tourne sur elle-même et est par exemple maintenue par une bague en carbone, du côté exposé au bain d'étain, et par un roulement à l'autre extrémité. Un ensemble de tube refroidi à l'eau, appelé canon, supporte en chacune de ses extrémités la bague en carbone d'une part et le roulement de l'autre. L'ensemble molette, lance, canon présente deux circuits de refroidissement distincts. Afin de pouvoir positionner la molette sur le bord du ruban de verre à l'intérieur du bain, la lance est généralement d'une grande longueur, par exemple de l'ordre de 4 m.

Les molettes sont entraînées via un moteur électrique. Suivant les cas, les molettes d'une même paire tournent à la même vitesse mais suivant l'application, elles peuvent également tourner à des vitesses différentes.

Tous ces dispositifs de bord connus présentent l'inconvénient majeur de nécessiter une place disponible importante à l'extérieur du bain. En effet pour orienter la molette par rapport au ruban de verre et notamment pour effectuer les mouvements d'angulation, l'extrémité de la machine extérieure au bain d'étain doit de déplacer. Ce déplacement important est lié à la longueur de la lance. Il peut atteindre 1,4 m par rapport à la position centrale lorsque l'axe de la molette est perpendiculaire à l'axe de défilement du ruban de verre et parallèle au plan de défilement du ruban de verre.

Le document US 4,299,612 décrit un dispositif de bord d'un ruban de verre flotté comprenant une lance au bout de laquelle sont fixées deux molettes. Ces molettes sont montées de telle sorte qu'elles puissent être orientées dans un plan non perpendiculaire à l'axe de la lance.

Pour résoudre ces problèmes, on prévoit, suivant l'invention, un dispositif de manipulation du bord d'un ruban de verre pâteux, en déplacement sur un bain liquide dans une chambre de flottage, comprenant une molette disposée à une extrémité distale d'une lance propre à être entraînée en rotation autour de son axe géométrique longitudinal, dans lequel la molette est montée, d'une part, pivotante dans plusieurs directions par rapport à l'axe géométrique longitudinal de la lance et, d'autre part, rotative autour de son axe propre qui peut être différent de l'axe géométrique longitudinal de la lance.

Selon l'invention une rotule est fixée à l'extrémité de la lance, et la molette est articulée sur cette rotule de sorte de permettre l'orientation de la molette dans un plan non perpendiculaire à l'axe de la lance, et un moyen de transmission du mouvement de rotation de la lance est prévu pour communiquer la rotation à la molette.

En général, la lance traverse une cavité axiale d'un canon, dans lequel la lance est montée rotative.

La molette peut être liée à la lance par un joint de transmission, en particulier homocinétique, constituant à la fois rotule d'articulation et moyen de transmission.

Avantageusement, un support de molette est lié au canon et l'axe du support est orientable par rapport à l'axe du canon. Un dispositif de contrôle de l'orientation du support de la molette peut être prévu pour permettre de maintenir l'orientation de la molette. Ce dispositif de contrôle de l'orientation du support de la molette peut comprendre un système de tringlerie relié à un coffret externe de la machine comportant le dispositif de contrôle.

La lance peut être creuse et comporter deux circuits de fluide permettant d'amener et collecter le fluide nécessaire au refroidissement de la molette et/ou de la lance. La lance peut être formée de deux tubes concentriques liés l'un à l'autre, se trouvant à l'intérieur du canon. Les deux tubes définissent l'alimentation et le retour de l'eau destinée à refroidir la molette.

Lorsque la molette et la lance ne nécessitent pas de refroidissement, la lance peut présenter une section pleine.

Suivant une forme de réalisation de l'invention, le support de la molette est un moyeu, maintenu par un étrier fixé sur le canon. La molette comporte une partie logée à l'intérieur du moyeu, et des roulements fixés entre cette partie de la molette et son moyeu permettent la rotation de la molette dans son support.

Une rotule avec un dispositif d'étanchéité lie le tube externe de la lance et l'axe de la molette. L'étanchéité est assurée avec un système de joint approprié.

Un flexible permettant de transmettre un mouvement de rotation relie la lance, ou le tube intérieur de la lance, et l'axe interne de la molette.

L'invention est également relative à une installation de production de verre plat flotté, comprenant une chambre de flottage dans laquelle se déplace un liquide sur lequel du verre fondu pâteux est amené à flotter et à s'étaler en formant un ruban, caractérisée en ce qu'elle comporte au moins un dispositif de manipulation de bord du ruban de verre tel que défini précédemment.

L'invention consiste, mises à part les dispositions exposées ci-dessus, en un certain nombre d'autres dispositions dont il sera plus explicitement question ci-après à propos d'exemples de réalisation décrits avec référence au dessin annexé, mais qui ne sont nullement limitatifs. Sur ce dessin :
Fig.1 représente une vue en coupe, par un plan horizontal passant par l'axe de la lance, d'une forme de réalisation de dispositif de manipulation de bord suivant l'invention dans la version ne nécessitant pas de circulation de fluide pour refroidir la lance et/ou la molette.
Fig.2 représente une vue en coupe, semblable à Fig.1, d'une forme de réalisation de dispositif de manipulation de bord suivant l'invention dans la version nécessitant une circulation de fluide pour refroidir la lance et/ou la molette, et
Fig.3 représente une vue extérieure d'une forme de réalisation de dispositif de manipulation de bord suivant l'invention

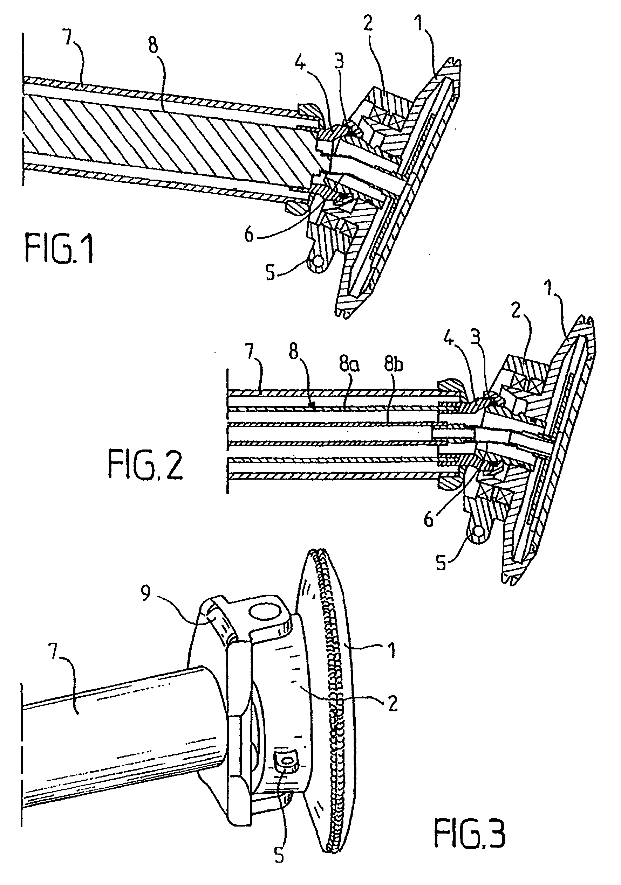

En se reportant au dessin, on peut voir une molette 1 qui est tenue dans un support 2, lequel est lié à un canon 7 par l'intermédiaire d'un étrier 9 (Fig.3). Le support 2 est monté orientable dans l'étrier 9. La molette 1 est prévue pour entrer en contact avec le bord d'un ruban de verre flottant (non représenté) et pour l'entraîner. L'axe géométrique de pivotement du support 2 dans l'étrier 9 est généralement disposé perpendiculairement à la surface du ruban de verre.

Une rotule 4 est fixée à l'extrémité distale de la lance 8 et permet l'orientation de la molette 1, suivant plusieurs directions, dans un plan non perpendiculaire à l'axe géométrique de la lance 8.

Le mouvement de rotation de la lance 8, autour de son axe géométrique, peut être transmis à la molette 1 par l'intermédiaire d'une liaison flexible 6. Un dispositif d'étanchéité 3 protège la liaison flexible 6 et permet la circulation d'un éventuel fluide de refroidissement entre la lance 8 et la molette 1, Selon le mode de réalisation de Fig.2, la lance 8 est formée de deux tubes concentriques 8a, 8b, liés l'un à l'autre, ces deux tubes définissant l'alimentation et le retour de l'eau destinée à refroidir la molette,

En variante, la liaison entre la molette et la lance pourrait être réalisée par un joint de transmission, notamment homocinétique, en particulier de type Rzeppa, assurant à la fois la fonction de rotule et de liaison flexible.

Un dispositif de contrôle (non représenté) de l'orientation du support 2 de la molette sera fixé à un anneau 5 (Fig.3) prévu sur le support 2 pour maintenir l'orientation de la molette 1. Ce dispositif de contrôle de l'orientation du support 2 peut comprendre un système de tringlerie relié à un coffret externe d'une machine comportant le dispositif de manipulation du bord de ruban de verre.

## Revendications

1. Dispositif de manipulation du bord d'un ruban de verre pâteux en déplacement sur un bain liquide dans une chambre de flottage, comprenant une molette (1) propre à être entraînée en rotation par une lance (8) autour de son axe géométrique longitudinal, la molette (1) étant montée, d'une part, pivotante dans plusieurs directions par rapport à l'axe géométrique longitudinal de la lance et, d'autre part, rotative autour de son axe propre qui peut être différent de l'axe géométrique longitudinal de la lance, un moyen de transmission (6) du mouvement de rotation de la lance étant prévu pour communiquer la rotation à la molette
la molette (1) étant disposée à une extrémité distale de la lance (8), **caractérisé en ce que** :
- une rotule (4) est fixée à l'extrémité de la lance (8),
- et la molette (1) est articulée sur cette rotule de sorte de permettre l'orientation de la molette dans un plan non perpendiculaire à l'axe de la lance,.

2. Dispositif selon la revendication 1, **caractérisé en ce que** la lance (8) traverse une cavité axiale d'un canon (7), dans lequel la lance est montée rotative.

3. Dispositif selon la revendication 1 ou 2, **caractérisé en ce que** la molette est liée à la lance par un joint de transmission, en particulier homocinétique, constituant à la fois rotule d'articulation et moyen de transmission.

4. Dispositif selon la revendication 2, ou l'ensemble de la revendication 2 et de la revendication 3, **caractérisé en ce qu'**un support de molette (2) est lié au canon (7) et **en ce que** l'axe du support (2) est orientable par rapport à l'axe du canon.

5. Dispositif selon la revendication 4, **caractérisé en ce qu'**un dispositif de contrôle de l'orientation du support de la molette est prévu pour permettre de maintenir l'orientation de la molette.

6. Dispositif selon la revendication 5, **caractérisé en ce que** le dispositif de contrôle de l'orientation du support de la molette comprend un système de tringlerie relié à un coffret externe d'une machine comportant ce dispositif.

7. Dispositif selon l'une quelconque des revendications 1 à 6, **caractérisé en ce que** la lance (8) est creuse et comporte deux circuits permettant d'amener et collecter un fluide nécessaire au refroidissement de la molette et/ou de la lance

8. Dispositif selon l'une quelconque des revendications 1 à 6, **caractérisé en ce que** la lance présente une section pleine, la molette et la lance ne nécessitant pas de refroidissement.

9. Installation de production de verre plat flotté, comprenant une chambre de flottage dans laquelle se déplace un liquide sur lequel du verre fondu pâteux est amené à flotter et à s'étaler en formant un ruban, **caractérisée en ce qu'** elle comporte au moins un dispositif de manipulation de bord du ruban de verre selon l'une quelconque des revendications 1 à 8.

## Patentansprüche

1. Vorrichtung zur Handhabung des Randes eines pastösen Floatglasbandes, das sich auf einem Flüssigbad in einer Floatkammer bewegt, mit einem Rändelrad (1), das geeignet ist, durch eine Lanze (8) um seine geometrische Längsachse angetrieben zu werden, wobei das Rändelrad (1) einerseits in mehrere Richtungen in Bezug auf die geometrische Längsachse der Lanze schwenkbar und andererseits um seine eigene Achse, die von derjenigen der geometrischen Längsachse der Lanze verschieden sein kann, drehbar montiert ist, wobei eine Einrichtung (6) zum Übertragen der Drehbewegung der Lanze vorgesehen ist, um die Drehung auf das Rändelrad zu übertragen, wobei das Rändelrad (1) an einem distalen Ende der Lanze (8) angeordnet ist, **dadurch gekennzeichnet, dass**
- ein Kugelgelenk (4) am Ende der Lanze (8) befestigt ist,
- und das Rändelrad (1) auf diesem Kugelgelenk derart gelenkig angeordnet ist, dass das Ausrichten des Rändelrads in einer zu der Achse der Lanze nicht senkrechten Ebene möglich ist.

2. Vorrichtung nach Anspruch 1, **dadurch gekennzeichnet, dass** die Lanze (8) sich durch einen Hohlraum einer Kanone (7) erstreckt, in welcher die Lanze drehbar montiert ist.

3. Vorrichtung nach Anspruch 1 oder 2, **dadurch gekennzeichnet, dass** das Rändelrad mit der Lanze über ein insbesondere homokinetisches Antriebsgelenk verbunden ist, das gleichzeitig die Gelenkkugel und die Übertragungseinrichtung bildet.

4. Vorrichtung nach Anspruch 2 oder der Kombination aus Anspruch 2 und Anspruch 3, **dadurch gekennzeichnet, dass** ein Rändelradträger (2) mit der Kanone (7) verbunden ist, und dass die Achse des Trägers (2) gegenüber der Achse der Kanone ausrichtbar ist.

5. Vorrichtung nach Anspruch 4, **dadurch gekennzeichnet, dass** eine Vorrichtung zur Steuerung der Ausrichtung des Trägers des Rändelrades vorgesehen ist, um das Beibehalten der Ausrichtung des Rändelrades zu ermöglichen.

6. Vorrichtung nach Anspruch 5, **dadurch gekennzeichnet, dass** die Vorrichtung zum Steuern der Ausrichtung des Rändelrades ein Gestängesystem aufweist, das mit einem Außengehäuse einer diese Vorrichtung aufweisenden Maschine verbunden ist.

7. Vorrichtung nach einem der Ansprüche 1 bis 6, **dadurch gekennzeichnet, dass** die Lanze (8) hohl ist und zwei Kreisläufe aufweist, die das Zuführen und das Sammeln eines für das Kühlen des Rändelrads und/oder der Lanze erforderlichen Fluids ermöglichen.

8. Vorrichtung nach einem der Ansprüche 1 bis 6, **dadurch gekennzeichnet, dass** die Lanze einen massiven Querschnitt aufweist, wobei das Rändelrad und die Lanze keine Kühlung erfordern.

9. Anlage zur Produktion von flachem Floatglas mit einer Floatkammer, in welcher sich eine Flüssigkeit bewegt, auf welcher pastöses geschmolzenes Glas schwimmt und sich unter Bildung eines Bandes ausbreitet, **dadurch gekennzeichnet, dass** sie mindestens eine Vorrichtung zur Handhabung des Randes des Glasbandes nach einem der Ansprüche 1 bis 8 aufweist.

## Claims

1. Device for handling the edge of a ribbon of float glass moving over a liquid bath in a flotation chamber, comprising a knurl (1) able to be rotated by a lance (8) about its longitudinal geometric axis, the knurl (1) being mounted on the one hand pivotably in a plurality of directions relative to the longitudinal geometric axis of the lance and on the other hand rotatably about its own axis, which may be different from the longitudinal geometric axis of the lance, a means for transmitting (6) the rotational movement of the lance being provided for communicating the rotation to the knurl, the knurl (1) being arranged at a distal end of the lance (8), **characterised in that**
- a ball joint (4) is fixed to the end of the lance (8),
- and the knurl (1) is articulated onto said ball joint so as to enable the orientation of the knurl in a plane not perpendicular to the axis of the lance.

2. Device according to claim 1, **characterised in that** the lance (8) traverses an axial cavity of a cylinder (7) in which the lance is mounted rotatably.

3. Device according to claim 1 or 2, **characterised in that** the knurl is connected to the lance by a transmission joint, in particular a homokinetic joint, forming both the articulation ball joint and the transmission means.

4. Device according to claim 2, or both claim 2 and claim 3, **characterised in that** a knurl support (2) is connected to the cylinder (7) and **in that** the axis of the support (2) can be oriented in relation to the axis of the cylinder.

5. Device according to claim 4, **characterised in that** a device for controlling the orientation of the support of the knurl is provided to make it possible to maintain the orientation of the knurl.

6. Device according to claim 5, **characterised in that** the device for controlling the orientation of the support of the knurl comprises a linkage system connected to an external box of a machine comprising said device.

7. Device according to any one of claims 1 to 6, **characterised in that** the lance (8) is hollow and comprises two circuits making it possible to supply and remove a fluid necessary to the cooling of the knurl and/or of the lance.

8. Device according to any one of claims 1 to 6, **characterised in that** the lance has a solid section, the knurl and the lance not needing to be cooled.

9. Installation for the production of flat float glass, comprising a float chamber in which a liquid is displaced on which molten glass is floated and spread forming a ribbon, **characterised in that** it comprises at least one device for handling the edge of a ribbon of glass according to any one of claims 1 to 8.
